# EUROPÄISCHE PATENTSCHRIFT

(11) **EP 0 553 697 B1**
(45) Veröffentlichungstag und Bekanntmachung des Hinweises auf die Patenterteilung: **01.05.1996**
(21) Anmeldenummer: 93100767.8
(22) Anmeldetag: 20.01.1993
(51) Int. Cl.: A01C 15/00

(54) **Verteilmaschine**
Seed drill
Semoir

(30) Priorität: 28.01.1992 DE 4202233
(43) Veröffentlichungstag der Anmeldung: 04.08.1993
(73) Patentinhaber: Amazonen-Werke H. Dreyer GmbH & Co. KG, D-49205 Hasbergen (DE)
(72) Erfinder: Siefken, Claus, W-2875 Ganderkesee 1 (DE)

(56) Entgegenhaltungen:
- DE-A- 3 419 191
- GB-A- 2 163 333
- DATABASE WPI Week 7933, Derwent Publications Ltd., London, GB; AN 79-H0575B

## Beschreibung

Die Erfindung betrifft eine Verteilmaschine gemäß des Oberbegriffes des Patentanspruches.

Eine derartige Verteilmaschine ist durch die deutsche Patentschrift 34 19 191 bekannt. Bei dieser Verteilmaschine werden in den Vorratsbehälter Trennwände zum Ausbringen kleinster Aussaatmengen von Material eingesetzt, um so das Volumen des Vorratsbehälterraumes, in dem das auszubringende Gut eingefüllt wird, erheblich zu reduzieren. Es hat sich nun jedoch gezeigt, daß aufgrund von Fertigungstolleranzen eine ausreichende Abdichtung zwischen der Trennwand und der Vorratsbehälterwand in der Praxis nicht möglich ist, so daß während des Einsatzbetriebes relativ viel Material in den abgetrennten Vorratsbehälterbereich gelangt.

Der Erfindung liegt die Aufgabe zugrunde, auf einfache Weise eine Volumenreduzierung des Vorratsbehälters zum Ausbringen von Material, die in kleinen Mengen ausgebracht werden müssen, zu erreichen.

Diese Aufgabe wird erfindungsgemäß durch die kennzeichnenden Merkmale des Patentanspruchs gelöst.

Durch diese Maßnahme ist es nicht unbedingt erforderlich, eine Abdichtung zwischen dem Einsatzelement und den Vorratsbehälterwänden vorzunehmen, weil durch die volumenmäßige Ausdehnung des Einsatzelementes das Vorratsbehältervolumen einfach reduziert wird.

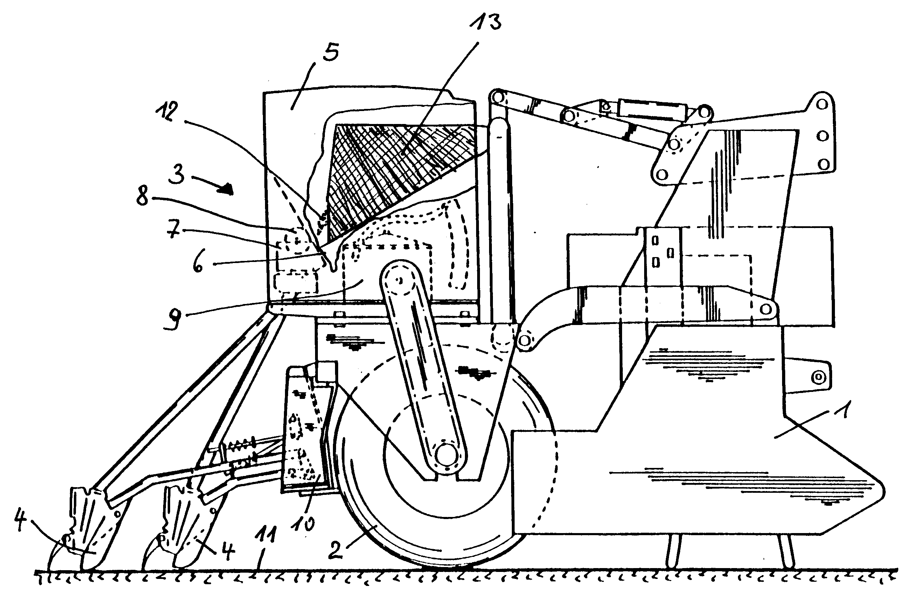

Weitere Einzelheiten der Erfindung sind der Beispielsbeschreibung und der Zeichnung zu entnehmen. Die Zeichnung zeigt
eine Gerätekombination mit Verteilmaschine in Seitenansicht und in Prinzipdarstellung.

Die Gerätekombination besteht aus der Bodenbearbeitungsmaschine 1, der Bodenwalze 2, der auf der Bodenwalze 2 aufgesattelten Drillmaschine 3, mit den Säscharen 4. Die Drillmaschine 3 weist den Vorratsbehälter 5 auf. Der Vorratsbehälter 5 weist in seinem unteren Bereich - in Seitenansicht gesehen - eine trichterförmige Form auf, so daß der Vorratsbehälter 5 quer zu seiner Längsrichtung in seinem unteren Bereich den keilförmigen Querschnitt bildet. Auf der hinteren Seite des Vorratsbehälters 5 befinden sich, in seiner Längsrichtung gesehen, nebeneinander angeordnete Auslauföffnungen 6, vor denen die Sägehäuse 7 mit den Dosierorganen 8 angeordnet sind. Die Dosierorgane 8 werden in nicht näher dargestellter Weise von der Bodenwalze 2 über das Regelgetriebe 9 angetrieben. An dem Rahmen 10 der Drillmaschine sind die Säschare 4 angelenkt, die das von den Dosierorganen 8 dosierte Saatgut in den Boden 11 einbringen. Im unteren Bereich des Vorratsbehälters 5 ist die angetriebene Rührwelle 12 angeordnet. Die Rührwelle 12 ist über eine Kupplung in ihrem Antriebstrang stillzusetzen.

Wenn in dem Vorratsbehälter 5 das in Längsrichtung des Vorratsbehälters 5 sich erstreckende Einsatzelement 13, welches als Füllstück ausgebildet ist, angeordnet wird, ist die Rührwelle 12 stillgesetzt. Das Füllstück 13 ist als Vollkörper aus einem Material mit einem leichten spezifischen Gewicht ausgebildet. Durch das Füllstück 13 wird das Volumen des Vorratsbehälters 5 erheblich und sicher reduziert.

## Patentansprüche

1. Verteilmaschine, insbesondere Drillmaschine, mit einem Vorratsbehälter (5), der eine langgestreckte Form und zumindest in seinem unteren Bereich einen trichterförmigen Verlauf aufweist, so daß der Vorratsbehälter (5) quer zu seiner Längsrichtung in seinem unteren Bereich einen zumindest annähernd keilförmigen Querschnitt bildet, wobei zumindest auf der einen Seite des langgestreckten Vorratsbehälters (5) Auslauföffnungen (6) angeordnet sind, vor denen sich antreibbare Dosierorgane 8 befinden, wobei in dem Vorratsbehälter 5 ein volumenreduzierendes Einsatzelement (13) angeordnet ist, dadurch gekennzeichnet, daß das Einsatzelement (13) als ein aus einem Vollkörper bestehendes Füllstück ausgebildet ist und sich mit seiner unteren Fläche über den abzudeckenden Bereich des schrägen Vorratsbehälterbodens ersteckt.

## Claims

1. Distributor, more especially a drill, including a hopper (5), which has an elongate form and a funnel-shaped configuration at least in its lower region, so that the hopper (5) forms, transversely relative to its longitudinal direction, an at least approximately wedge-shaped cross-section in its lower region, outlet apertures (6) being provided at least on one side of the elongate hopper (5), drivable metering members (8) being situated in front of said apertures, and a volume-reducing insert element (13) being disposed in the hopper (5), characterised in that the insert element (13) is configured as a filler comprising a solid body and extends with its lower face beyond the region of the inclined hopper base to be covered.

## Revendications

1. Distributeur notamment semoir comportant un réservoir (5) allongé qui présente au moins dans sa zone inférieure, une forme en trémie pour que le réservoir (5) possède, dans sa zone inférieure transversalement à sa direction longitudinale, une section approximativement en forme de coin, et au moins d'un côté, le réservoir (5) allongé comprend des orifices de sortie (6) devant lesquels se trouvent des organes de dosage (8), entraînés, et le réservoir d'alimentation (5) comporte un élément formant insert (13), réduisant le volume, distributeur caractérisé en ce que l'élément formant insert (13) est une pièce de remplissage constituée par un corps plein s'étendant avec sa surface inférieure par dessus la zone à recouvrir du fond incliné du réservoir.
